# EUROPEAN PATENT SPECIFICATION

(11) **EP 0 442 213 B1**
(45) Date of publication and mention of the grant of the patent: **31.01.1996**
(21) Application number: 90313690.1
(22) Date of filing: 14.12.1990
(51) Int. Cl.: G11B 5/187, G11B 5/127, G11B 5/255, G11B 5/31

(54) **Method of manufacturing a pole tip structure in a thin film magnetic transducer**
Verfahren zur Erzeugung einer Polspitzenstruktur bei einem magnetischen Wandler in Dünnfilmausführung
Procédé pour la fabrication d'une structure avec pointe de pôle dans un transducteur

(30) Priority: 15.02.1990 US 480250
(43) Date of publication of application: 21.08.1991
(73) Proprietor: SEAGATE TECHNOLOGY INTERNATIONAL, Georgetown, Grand Cayman Island (KY)
(72) Inventor: Gau, George J., Santa Barbara, California 93110 (US)
(74) Representative: Sturt, Clifford Mark

(56) References cited:
- EP-A- 0 311 854
- EP-A- 0 373 793
- EP-A- 0 383 739
- EP-A- 0 399 800
- US-A- 4 399 479
- US-A- 4 436 593
- US-A- 4 897 747

## Description

The invention relates to methods of manufacturing pole tip structures in thin film magnetic transducers e.g. read/write heads.

The quest for increased data storage density has continually dr-iven data storage technology. Thin film magnetic read/write heads have greatly increased the magnitude of data storage density obtainable in a magnetic storage medium. This increase has been largely due to the small size of thin film magnetic heads.

In a thin film magnetic head, a gap area is formed at the tips of two legs or pole pieces used to form the flux path of the thin film head. This flux path is closed at the end opposite the gap area by a back-gap via. Conductors carry electric current through the centre of the thin film head and between the two magnetic legs. When an electric current flows through these conductors, a magnetic flux is caused to flow in the core constituted by the two pole pieces of the thin film head. During operation, magnetic fields may be impressed upon a magnetic storage medium by this magnetic flux. As the magnetic flux spans the gap area, a magnetic fringe field emanates from the pole tips. Conversely, information may be recovered from a magnetic storage medium, because a varying magnetic field near the gap area induces an electric current to flow in the conductors.

One area in which thin film head performance may be enhanced is in the alignment between upper and lower pole tips. This alignment is critical because it defines the characteristic fringe field. The magnetic field density and gradient are directly related to this alignment.

A technique which provides better pole tip alignment begins with a bottom pole deposited upon a substrate, in which the bottom pole is substantially wider than desired. Next an insulator is deposited upon the bottom pole and forms the gap area in the completed head. A top pole is deposited upon the insulator. The top pole is deposited by using a photo-resist process comprising: depositing a photo-resist layer; exposing the photo-resist layer to radiation; and applying a photo-resist developer which chemically removes or "etches" out a three dimensional relief in the layer. The top pole piece is deposited upon the insulator and formed using a conventional positive photo-resist with a "positively sloped profile". A positively sloped profile is a profile which is wider at the top or outer edge than at the bottom, inner edge closest to the substrate. The resulting top pole formed by the positive tone photo-resist has a profile with negatively sloped sides.

A protective photo-resist layer may then be deposited upon the top pole. The protective photo-resist layer comprises positive photo-resist having a positive tone with a positively sloped profile. The non-aligned pole tip structure is aligned using a material removal process such as ion milling. In ion milling, high energy ions bombard the surface to remove the non-aligned portions of the pole tip. The protective photo-resist mask shields the top pole and a portion of the insulating gap material and bottom pole from the high energy ions. This leaves behind a substantially aligned pole tip structure.

There are a number of problems associated with this alignment technique. The protective photo-resist mask and the top pole have profiles with opposing slopes. This causes a lip to be formed at their intersection. This lip provides an area for redeposition of milled material during the ion milling process. The self masking of the top pole during ion milling limits the accuracy of the ultimate pole tip width.

European Patent Application No. 90850057.2 (Publication No. EP 0,383,739), which falls within Article 54(3) EPC, discloses a method for making a thin film magnetic head in which the pole tips are trimmed to a predetermined width prior to the completion of the magnetic yoke structure. The thin film magnetic head is produced through deposition of the first magnetic layer in two stages, through deposition of the coil, the insulating material for the coil and through deposition of the second magnetic layer. The thin film head is then masked by a photoresist mask having openings to expose specific parts of the pole tip region, and an ion milling operation is used to etch the head assembly to form pole tips having a predetermined width. The shaping layer for the second magnetic layer is then deposited to complete the magnetic yoke structure.

US-A-4,399,479 discloses the use of a movable mask technique whereby a first deposited magnetic film is provided with a tapered, or knife-, edge. Gap spacer material is then deposited on the film knife-edge. Thereafter, a second magnetic film is deposited atop the knife-edge, as well as on the same substrate that supports the first magnetic film.

The present invention seeks to provide improved data storage density in a magnetic storage medium through a thin film magnetic head having more accurately aligned top and bottom pole pieces than previously possible.

According to one aspect of the present invention, there is provided a method of manufacturing a pole tip structure in a thin film magnetice transducer for reading/writing information on a magnetic storage medium, the method comprising depositing a magnetic bottom pole on a substrate; depositing an insulating gap layer on the magnetic bottom pole; depositing photoresist upon the bottom pole (40) and the insulating gap layer (44) and creating in the photoresist above the magnetic bottom pole (40) an opening with dams having opposed negatively sloped profiles at the insulating gap layer; depositing a magnetic top pole on the insulating gap layer in a three dimensional relief formed by the negative slopes of the photoresist dams, such that the magnetic top pole has a positively sloped profile; and depositing a mask on the magnetic top pole.

In one embodiment, depositing the magnetic top pole comprises: depositing a negative tone photo-resist layer; exposing the negative tone photoresist layer to actinic radiation through a radiation mask; developing the photo-resist layer whereby a three dimensional relief is formed in the photo-resist layer; depositing magnetic material in the three dimensional relief thereby forming the magnetic top pole, and etching the photo-resist layer with a chemical photo-resist etchant.

In another embodiment depositing the magnetic top pole comprises: depositing a positive tone photo-resist layer, performing an image reversal process whereby three-dimensional relief is formed in the photo-resist layer, depositing magnetic material in the three dimensional relief thereby forming the magnetic top pole, and removing the photo-resist layer.

Performing the image reversal process may comprise exposing the positive tone photo-resist layer to radiation through a radiation mask, baking the photo-resist layer, flood exposing the photo-resist layer to radiation, and developing the photo-resist layer thereby forming the three dimensional relief.

Preferably the mask comprises a positive tone photo-resist layer having a positively sloped profile.

The positively sloped profile is substantially the same as the positively sloped profile of the top pole.

In one embodiment, the profile of the photo-resist layer and the profile of the top pole are in substantial alignment.

The resultant pole structure produced by a method according to the present invention is more suitable for the ion milling alignment process than the top pole structure formed with positive tone photo-resist.

The invention is illustrated, merely by way of example, in the accompanying drawings, in which:-
Figure 1 is a top view of a thin film magnetic read/write head;
Figure 2 is a side view of the thin film head of Figure 1;
Figure 3 is a cross sectional view of a prior art pole tip structure prior to aligning the pole tip pieces with an ion milling technique; and
Figures 4A to 4E are cross sectional views illustrating a method according to the present invention of manufacturing a pole tip structure in a thin film magnetic transducer, prior to aligning pole tips using an ion milling technique.

The miniaturisation of magnetic read/write heads has been driven by the quest for increased data storage densities on magnetic storage media. This has lead to integrated thin film magnetic heads in which the manufacturing process bears many similarities to the manufacturing process used to fabricate integrated electronic circuits. The substantial two dimensionality of thin film heads permits the use of magnetic films with higher permeability and higher saturation magnetisation providing better performance while the minute size of the head further increases track densities. Additionally the ability to fabricate the heads in an array provides significant cost advantages.

Fabrication of thin film magnetic heads uses a photo-lithographic process in which a pattern is defined using a latent image in a photo-resist layer. The latent image is developed out e.g. chemically removed leaving a three dimensional relief profile. The relief may then be filled with the appropriate material for that layer of the thin film head.

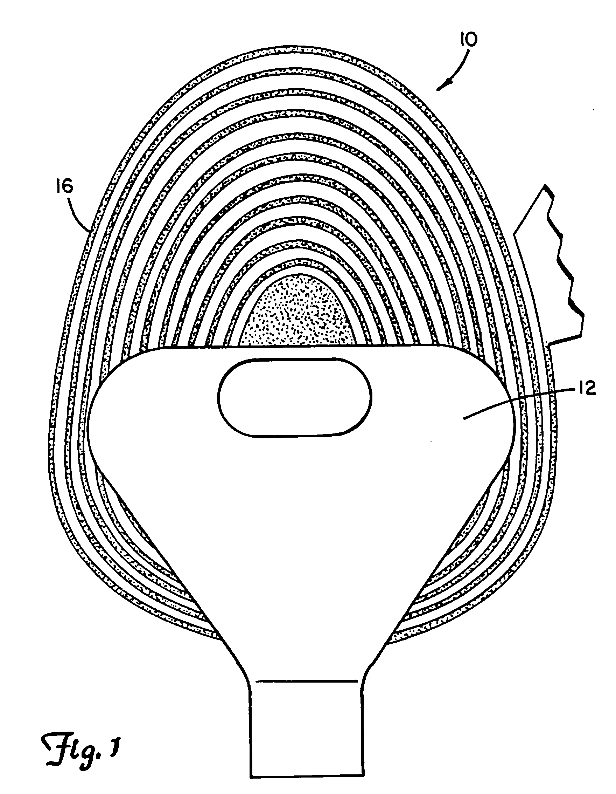

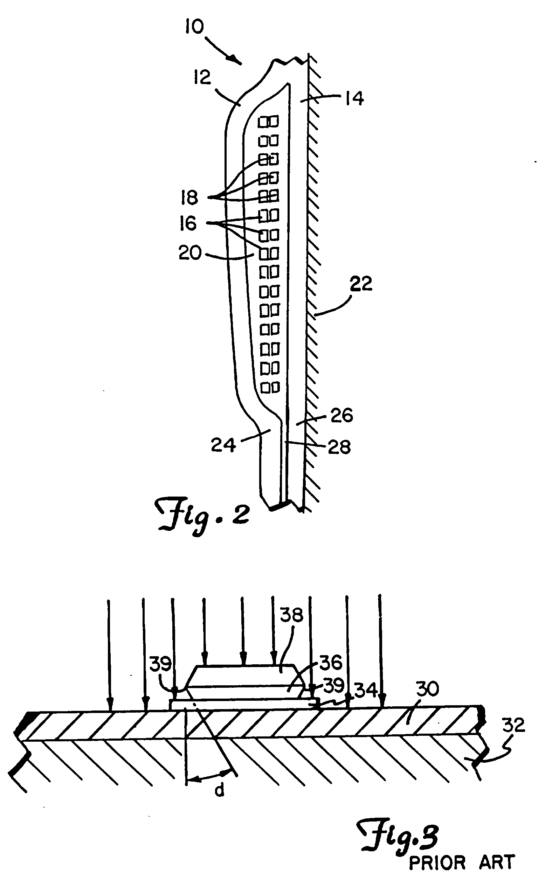

A multi-turn inductive thin film magnetic head 10 is shown schematically in Figures 1 and 2. Figure 1 is a top view of the head 10 and Figure 2 is a side cross sectional view. The head 10 includes top and bottom magnetic thin film core legs 12, 14 which typically are of a nickel/iron alloy. Photo-lithography is used to define the geometry of both top and bottom legs 12, 14. Conductive coils 16, 18 extend between the top and bottom legs 12, 14 and are electrically insulated from the top and bottom legs by an insulating layer 20. The head 10 is deposited upon a non-magnetic substrate 22 comprising, for example, a ceramic compound such as Al₂ 0₃ -TiC.

In fabricating the head 10, several separate pattern transfer processes are used to deposit the head 10 upon the substrate 22. These transfer processes include lift-off, wet chemical etching, plating and sputtering. A typical head manufacturing process may account for more than a dozen masking levels and more than thirty processing steps including deposition, plating and etching.

During manufacture, a plurality of heads similar to the head 10 are deposited across the entire surface of the substrate 22. After the layers of the head 10 are deposited as depicted in Figures 1 and 2, the substrate 22 is "diced" or sliced into many individual thin film heads, each carried by a portion of the substrate 22 such that an upper pole tip 24, a lower pole tip 26 and a gap 28 are exposed. The pole tips 24, 26 and the gap 28 (and the portion of the substrate 22 underlying them) are then lapped in a direction generally inwards towards the centre of the head 10 to achieve the desired dimensions. This lapping process is a grinding process in which the exposed portion of the pole tips 24, 26 and the gap 28 are applied to an abrasive, such as a diamond slurry. Electrical contacts (not shown) are connected to the conductors 16, 18. The completed head is next attached to a carrying fixture (not shown) for use in reading and writing data on a magnetic storage medium such as a computer magnetic disk.

In operation, a magnetic storage medium is placed near the pole tips 24, 26. During the read operation, the changing magnetic field of the moving storage medium impresses a magnetic field upon the pole tips 24, 26. This magnetic field is carried by the legs 12, 14 around the conductors 16, 18. This magnetic field induces electrical current to flow through the conductors 16, 18 which may be detected using electrical detection circuitry. The electrical current is representative of the changing magnetic field produced by the moving magnetic storage medium.

During a write operation, an electrical current is caused to flow in the conductor 16 or the conductor 18. This electrical current causes a magnetic field in the legs 12, 14 and causes a magnetic field to cross the gap 28 between the pole tips 24, 26. The construction of the pole tips 24, 26 and the gap 28 causes a fringe field to extend beyond the boundary of the pole tips 24, 26 and into the adjacent magnetic storage medium. This fringe field may be used to impress magnetic fields upon the magnetic storage medium to write data.

There are two methods used to manufacture or fabricate magnetic thin film heads, either additive or subtractive. The additive approach is the dominant approach and involves a series of processing steps in which the various layers of the head 10 are deposited upon the substrate 22. The highest track density achievable is strongly influenced by the accuracy of alignment of the pole tips 24, 26 and their size. Magnetic pole tips typically have a pole thickness in the range of about 1 micron to about 5 microns depending upon the design criteria, i.e. a thicker pole for better over writing efficiency and a thinner pole for increased resolution capability during the read back operation. The side profile (i.e. the slope of the sides) of the pole tips 24, 26 is of great significance since off-track recording properties are strongly influenced by the side fringing of the magnetic field emanating from the pole tips 24, 26. The physical shape of the pole tips 24, 26 and the gap 28 significantly affect the performance of the head 10 during reading and writing. This side fringing will play a key role in the formation of the side erasure band, depending upon the strength of the side fringing field and corresponding field gradient distribution.

The accuracy of the alignment between the pole tips 24, 26 may be improved with a material removal process such as ion milling. In an ion milling process,, high energy ions bombard the surface of the head 10 to remove unwanted portions of some of the deposited layers selectively. A protective mask protects a portion of the pole tips 24, 26. The high energy ions mill away the exposed portions of the head 10 such that the non-aligned portions of the gap 28 and lower pole tip 26 are removed.

Figure 3 shows a prior art pole tip structure prior to ion milling. The thin film magnetic head and manufacturing method shown in Figure 3 are disclosed in European Patent Application No. 90305596.0 (Publication No. EP 0,399,800), which falls within the terms of Article 54(3) EPC. In Figure 3 an infinite width bottom pole 30 (i.e. substantially wider than the final width) is shown deposited upon a substrate 32. Insulating gap material 34 is deposited upon the bottom pole 30. A top pole 36 is next deposited upon the insulating gap material 34 and formed between two photo-resist dams (not shown). These photo-resist dams have a "positive tone" (i.e. a positively sloped profile in which the dams are wider at their base). This positive slope in the profiles of the photo-resist dams results in the top pole 36 having a negatively sloped profile as shown in Figure 3. In other words, the top pole 36 is narrower at its base (the portion closest to the substrate 32) than at its top. Finally, a protective photo-resist layer 38 is deposited upon the top pole 36. A positive photo-resist having a positive tone is used for the protective photo-resist layer 38, which results in the structure as shown in Figure 3. This fabrication process provides an abrupt change between the slopes of the profiles of the top pole 36 and the protective photo-resist layer 38 at the interface between the two. The negative slope (represented by angle d in Figure 3) in the profile of the top pole 36 forms a lip 39 on each side of the top pole 36. The pole tip region is then exposed to energetic ions indicated by the arrows in Figure 3. These ions bombard the exposed surfaces thereby milling away the exposed layers. The protective photo-resist layer 38 covers the top pole 36 such that following the ion milling process a substantially aligned top pole 36, gap material 34 and lower pole 30 structure remains.

It has been discovered, however, that the lip 39 in the top pole 36 shown in Figure 3 creates several problems which limit the attainable alignment between the pole tips 36, 30 and the gap material 34. The lip 39 "self masks" the upper pole 36 during ion milling. Self masking is a phenomenon in which a layer acts as its own mask, shielding itself during the material removal process. Furthermore, the lip 39 provides a sheltered area in which debris collects during the material removal process.

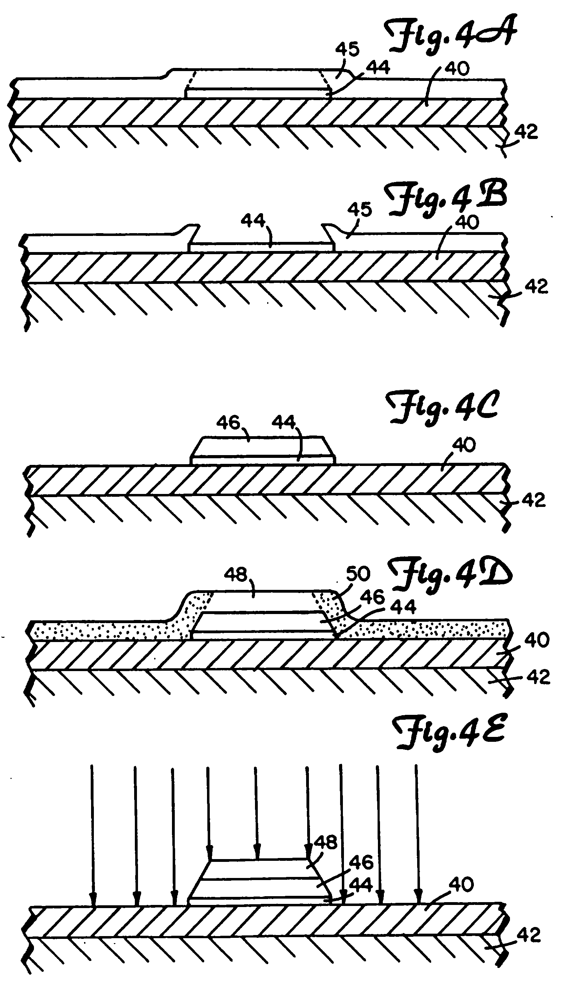

Figures 4A to 4E show the steps of a method according to the present invention. In Figure 4A, an infinite width bottom pole 40 is deposited upon a substrate 42. An insulating gap layer 44 is deposited upon the bottom pole 40. A negative tone photo-resist layer 45 is deposited upon the bottom pole 40 and the insulating gap layer 44. By exposing the photo-resist layer 45 to radiation, e.g. actinic radiation through a radiation mask, a latent image is formed as indicated by the dashed lines in the photo-resist layer 45. This can also be achieved by using an image reversal process of positive tone photo-resist. The latent image is chemically developed out (i.e. removed) as shown in Figure 4B. Figure 4B shows the three dimensional relief formed in the photo-resist layer 45 above the insulating gap layer 44. The latent image forms two "dams" between which core material is deposited. Figure 4C shows a top pole 46 with a positively sloped profile. The top pole 46 is formed by depositing magnetic core material in the three dimensional relief of Figure 4B. The photo-resist layer 45 is removed using a chemical etchant which leaves the positively sloped top pole 46.

If, alternatively, an image reversal process is used to form the top pole 46, a positive tone photo-resist layer is deposited upon the bottom pole 40 and exposed to radiation through a mask. The photo-resist is then baked followed by flood radiation exposure. When the positive tone resist is developed, the portion masked off is removed and leaves behind the latent image which has a negatively sloped profile.

Figure 4D shows a conventional positive tone photo-resist layer 50 deposited upon the bottom pole 40, the insulating gap layer 44 and the top pole 46. The photo-resist layer 50 is exposed to radiation through a mask which leaves a latent image as indicated by the dashed lines in Figure 4D. After development, the remaining resist is hard baked at elevated temperatures to serve as the masking layer for subsequent pole trimming.

Figure 4E shows the pole tip structure prior to ion milling. A layer of protective photo-resist is deposited on the top pole tip 46. The photo-resist layer 48 used to protect the pole tips 46, 40 and the gap layer 44 during the ion milling alignment process is formed using the photo-resist layer 50 such that the sides of the profile of the photo-resist layer 48 have a positive slope. Comparing the top pole tip 46 in Figure 4E with the top pole tip 36 in Figure 3, the lip and incongruence between the slopes of the side profiles of the top pole tip 36 and the protective photo-resist layer 38 in Figure 3 have been removed in the top pole tip 46 and the photo-resist layer 48 structure of Figure 4E. In fact, the sides of the top pole 46 and the photo-resist layer 48 may be formed as a continuous sloping wall as shown in Figure 4E.

Typically, the pole tips 40, 46 have a thickness (i.e. film depth) in a range from about 1 micron to 5 microns. The insulating gap layer 44 typically ranges in thickness from about 0.1 microns to about 1 micron. The photo-resist layer 48 has a thickness which typically ranges from about 1 micron to about 7 microns.

The arrows from above in Figure 4E indicate the direction of energetic ions during the material removal process (ion milling) used for aligning the top pole tip 46, the insulating gap layer 44 and the bottom pole tip 40. Ion milling, reactive ion milling, sputter etching or chemical etching could all be used to align the pole tips. Following milling, any portion of the photo-resist layer 48 remaining on the top pole tip 46 is removed with a photo-resist chemical etchant. In the pole tip structure of Figure 4E, there is no lip area in which re-deposition of the milled material may occur. The self masking problem associated with the top pole tip 36 of Figure 3 is also eliminated in Figure 4E by the positively sloped sides of the profile of the upper pole tip 46.

The slope of the profile sides of the top pole tip 40 and the photo-resist layer 48 may be altered together or individually as required. Furthermore, the upper pole tip 40 may be formed using materials other than negative tone photo-resist and the photo-resist layer 48 may comprise any type of protective material used in the alignment process.

## Claims

1. A method of manufacturing a pole tip structure in a thin film magnetic transducer for reading/writing information on a magnetic storage medium, the method comprising: depositing a magnetic bottom pole (40) on a substrate (42); depositing an insulating gap layer (44) on the magnetic bottom pole (40); depositing photoresist upon the bottom pole (40) and the insulating gap layer (44) and creating in the photoresist above the magnetic bottom pole (40) an opening with dams having opposed negatively sloped profiles at the insulating gap layer (44); depositing a magnetic top pole (46) on the insulating gap layer (44) in a three-dimensional relief formed by the negative slopes of the photoresist dams, such that the magnetic top pole has a positively sloped profile; and depositing a mask (48) on the magnetic top pole (46).

2. A method as claimed in claim 1 characterised in that:
depositing the photoresist dams comprises depositing a negative tone photo-resist layer (45); exposing the negative tone photo-resist layer (45) to actinic radiation through a radiation mask; and developing the photo-resist layer (45) to form the three dimensional relief in the photo-resist layer;
depositing the magnetic top pole (46) comprises depositing magnetic material in the three dimensional relief; and in that
the method further comprises etching the photo-resist layer (45) with a chemical photo-resist etchant.

3. A method as claimed in claim 1 characterised in that:
depositing photoresist dams comprises depositing a positive tone photo-resist layer (45); and performing an image reversal process whereby three-dimensional relief is formed in the photo-resist layer (45);
depositing the magnetic top pole (46) comprises depositing magnetic material in the three dimensional relief; and in that
the method further comprises removing the photo-resist layer.

4. A method as claimed in claim 3 characterised in that performing the image reversal process comprises exposing the positive tone photo-resist layer (45) to radiation through a radiation mask, baking the photo-resist layer, flood exposing the photo-resist layer to radiation, and developing the photo-resist layer thereby forming the three dimensional relief.

5. A method as claimed in any preceding claim characterised in that the mask (48) comprises a positive tone photo-resist layer (50) having a positively sloped profile.

6. A method as claimed in claim 5 characterised in that the positively sloped profile is substantially the same as the positively sloped profile of the top pole (46).

7. A method as claimed in claim 6 characterised in that the profile of the photo-resist layer (50) and the profile of the top pole (46) are in substantial alignment.

8. A method as claimed in any preceding claim characterised in that the magnetic top pole (46) has a thickness in the range of about 1 micron to about 5 microns.

9. A method as claimed in any preceding claim characterised in that the mask (48) has a thickness in the range of about 1 micron to about 7 microns.

10. A method as claimed in any preceding claim characterised in that the insulating gap layer (44) has a thickness in the range of about 0.1 microns to about 1 micron.

11. A method as claimed in any preceding claim characterised in that the magnetic bottom pole (40) has a thickness in the range of about 1 micron to about 5 microns.

## Patentansprüche

1. Verfahren zur Herstellung einer Polspitzenstruktur in einem magnetischen Dünnfilmwandler zum Lesen und Schreiben von Informationen von bzw. auf einem magnetischen Speichermedium, wobei das Verfahren: die Abscheidung eines unteren magnetischen Pols (40) auf einem Substrat (42), die Abscheidung einer isolierenden Spaltschicht (44) auf dem unteren magnetischen Pol (40), die Abscheidung von Photolack auf dem unteren Pol (40) und der isolierenden Spaltschicht (44), wobei in dem Photolack oberhalb des unteren Magnetpols (40) eine Öffnung mit Dämmen geschaffen wird, die gegenüberliegende negativ geneigte Profile an der Isolierspaltschicht (45) aufweisen, die Abscheidung eines oberen magnetischen Pols (46) auf der Isolierspaltschicht (44) in einem dreidimensionalen Relief, das durch die negativen Neigungen der Photolack-Dämme derart gebildet ist, daß der obere magnetische Pol ein positiv geneigtes Profil aufweist, und das Abscheiden einer Maske (48) auf dem oberen magnetischen Pol (46) umfaßt.

2. Verfahren nach Anspruch 1,
dadurch gekennzeichnet, daß die Abscheidung der Photolack-Dämme die Abscheidung einer eine negative Schattierung aufweisenden Photolackschicht (45), die Belichtung der eine negative Schattierung aufweisenden Photolackschicht (45) mit einer actinischen Strahlung durch eine Strahlungsmaske und die Entwicklung der Photolackschicht (45) zur Bildung des dreidimensionalen Reliefs in der Photolackschicht umfaßt, daß die Abscheidung des oberen magnetischen Pols (46) die Abscheidung von magnetischem Material in dem dreidimensionalen Relief umfaßt, und daß das Verfahren weiterhin das Ätzen der Photolackschicht (45) mit einem chemischen Photolack-Ätzmittel umfaßt.

3. Verfahren nach Anspruch 1,
dadurch gekennzeichnet, daß
- die Abscheidung der Photolack-Dämme die Abscheidung einer eine positive Schattierung aufweisenden Photolackschicht (45) und die Ausführung eines Bildumkehrverfahrens umfaßt, wodurch das dreidimensionale Relief in der Photolackschicht (45) gebildet wird,
- die Abscheidung des oberen magnetischen Pols (46) die Abscheidung von magnetischem Material in dem dreidimensionalen Relief umfaßt, und daß
- das Verfahren weiterhin die Entfernung der Photolackschicht umfaßt.

4. Verfahren nach Anspruch 3,
dadurch gekennzeichnet, daß die Ausführung des Bildumkehrverfahrens die Belichtung der eine positive Schattierung aufweisenden Photolackschicht (45) mit einer Strahlung durch eine Strahlungsmaske, das Backen der Photolackschicht, die Flutbelichtung der Photolackschicht mit einer Strahlung und die Entwicklung der Photolackschicht umfaßt, wodurch das dreidimensionale Relief gebildet wird.

5. Verfahren nach einem der vorhergehenden Ansprüche,
dadurch gekennzeichnet, daß die Maske (48) eine eine positive Schattierung aufweisende Photolackschicht (50) mit einem positiv geneigten Profil umfaßt.

6. Verfahren nach Anspruch 5,
dadurch gekennzeichnet, daß das positiv geneigte Profil im wesentlichen gleich dem positiv geneigten Profil des oberen Pols (46) ist.

7. Verfahren nach Anspruch 6,
dadurch gekennzeichnet, daß das Profil der Photolackschicht (50) und das Profil des oberen Pols (46) im wesentlichen miteinander ausgerichtet sind.

8. Verfahren nach einem der vorhergehenden Ansprüche,
dadurch gekennzeichnet, daß der obere magnetische Pol (46) eine Dicke im Bereich von ungefähr 1 Mikrometer bis ungefähr 5 Mikrometer aufweist.

9. Verfahren nach einem der vorhergehenden Ansprüche,
dadurch gekennzeichnet, daß die Maske (48) eine Dicke im Bereich von ungefähr 1 Mikrometer bis ungefähr 7 Mikrometer aufweist.

10. Verfahren nach einem der vorhergehenden Ansprüche,
dadurch gekennzeichnet, daß die Isolierspaltschicht (44) eine Dicke im Bereich von ungefähr 0,1 Mikrometer bis ungefähr 1 Mikrometer aufweist.

11. Verfahren nach einem der vorhergehenden Ansprüche,
dadurch gekennzeichnet, daß der untere magnetische Pol (40) eine Dicke im Bereich von ungefähr 1 Mikrometer bis ungefähr 5 Mikrometer aufweist.

## Revendications

1. Procédé de fabrication d'une structure d'extrémité de pôle dans un transducteur magnétique à couches minces pour lire/écrire des informations sur un support de stockage magnétique, le procédé comprenant :
le dépôt d'un pôle magnétique inférieur (40) sur un substrat (42) ; le dépôt d'une couche isolante formant entrefer (44) sur le pôle magnétique inférieur (40) ; le dépôt de photorésist sur le pôle inférieur (40) et sur la couche isolante formant entrefer (44) et la création dans le photorésist au-dessus du pôle magnétique inférieur (40) d'une ouverture munie de barrages ayant des profils inclinés négativement opposés à la couche isolante formant entrefer (44) ; le dépôt d'un pôle magnétique supérieur (46) sur la couche isolante formant entrefer (44) dans un relief en trois dimensions formé par les pentes négatives des barrages de photorésist, de façon que le pôle magnétique supérieur ait un profil incliné de façon positive ; et le dépôt d'un masque (48) sur le pôle magnétique supérieur (46).

2. Procédé selon la revendication 1, caractérisé en ce que :
le dépôt des barrages de photorésist comprend le dépôt d'une couche de photorésist négatif (45) ; l'exposition de la couche de photorésist négatif (45) à un rayonnement actinique à travers un masque de rayonnement ; et le développement de la couche de photorésist (45) pour former le relief en trois dimensions dans la couche de photorésist ;
le dépôt du pôle magnétique supérieur (46) comprend le dépôt de matière magnétique dans le relief en trois dimensions ; et en ce que
le procédé comprend, de plus, l'attaque de la couche de photorésist (45) avec un réactif d'attaque chimique de photorésist.

3. Procédé selon la revendication 1, caractérisé en ce que :
le dépôt des barrages de photorésist comprend le dépôt d'une couche de photorésist positif (45) ; et l'exécution d'un processus d'inversion d'image de façon que le relief en trois dimensions soit formé dans la couche de photorésist (45) ;
le dépôt du pôle magnétique supérieur (46) comprend le dépôt de matière magnétique dans le relief en trois dimensions ; et en ce que
le procédé comprend, de plus, l'enlèvement de la couche de photorésist.

4. Procédé selon la revendication 3, caractérisé en ce que l'exécution du processus d'inversion d'image comprend l'exposition de la couche de photorésist positif (45) à un rayonnement à travers un masque de rayonnement, la cuisson de la couche de photorésist, l'exposition lumineuse de la couche de photorésist au rayonnement, et le développement de la couche de photorésist pour former, de ce fait, le relief en trois dimensions.

5. Procédé selon l'une quelconque des revendications précédentes, caractérisé en ce que le masque (48) comprend une couche de photorésist positif (50) ayant un profil incliné de façon positive.

6. Procédé selon la revendication 5, caractérisé en ce que le profil incliné de façon positive est sensiblement le même que le profil incliné de façon positive du pôle supérieur (46).

7. Procédé selon la revendication 6, caractérisé en ce que le profil de la couche de photorésist (50) et le profil du pôle supérieur (46) sont sensiblement alignés.

8. Procédé selon l'une quelconque des revendications précédentes, caractérisé en ce que le pôle magnétique supérieur (46) a une épaisseur dans la plage de 1 micron environ à 5 microns environ.

9. Procédé selon l'une quelconque des revendications précédentes, caractérisé en ce que le masque (48) a une épaisseur dans la plage de 1 micron environ à 7 microns environ.

10. Procédé selon l'une quelconque des revendications précédentes, caractérisé en ce que la couche isolante formant entrefer (44) a une épaisseur dans la plage de 0,1 micron environ à 1 micron environ.

11. Procédé selon l'une quelconque des revendications précédentes, caractérisé en ce que le pôle magnétique inférieur (40) a une épaisseur dans la plage de 1 micron environ à 5 microns environ.
